# EUROPEAN PATENT SPECIFICATION

(11) **EP 4 588 665 B1**
(45) Date of publication and mention of the grant of the patent: **02.12.2026**
(21) Application number: 24760094.3
(22) Date of filing: 02.02.2024
(51) Int. Cl.: B41J 2/01, B41J 2/21

(54) **INKJET RECORDING SYSTEM AND INKJET RECORDING METHOD**
TINTENSTRAHLAUFZEICHNUNGSSYSTEM UND TINTENSTRAHLAUFZEICHNUNGSVERFAHREN
SYSTÈME D'IMPRESSION PAR JET D'ENCRE ET PROCÉDÉ D'IMPRESSION PAR JET D'ENCRE

(30) Priority: 20.02.2023 JP 2023024627
(43) Date of publication of application: 23.07.2025
(73) Proprietor: Kyocera Corporation, Kyoto-shi, Kyoto 612-8501 (JP)
(72) Inventor: MUTSUO, Toshiaki, Kyoto-shi, Kyoto 612-8501 (JP)
(74) Representative: Viering, Jentschura & Partner mbB Patent- und Rechtsanwälte
(86) International application number: PCT/JP2024/003583
(87) International publication number: WO 2024/176788

(56) References cited:
- JP-A- 2002 067 394
- JP-A- 2007 268 825
- JP-A- 2009 119 806
- JP-A- 2011 079 331
- JP-A- 2019 171 643
- JP-A- 2021 030 647
- JP-A- H1 170 645
- US-A1- 2010 110 131
- US-A1- 2015 015 626
- US-A1- 2019 255 858

## Description

### TECHNICAL FIELD

The present invention relates to an inkjet recording system and an inkjet recording method.

### BACKGROUND OF INVENTION

Known inkjet printers perform printing on recording materials by serial printing. In such a serial-printing inkjet printer, a pass operation and a feed operation are alternately repeated. In the pass operation, an ink head ejects ink while being moved in a main scanning direction to form a strip of a unit image extending in the main scanning direction on a recording material. In the feed operation, the recording material is fed in a subscanning direction perpendicular to the main scanning direction.

An image formed by serial printing may have, for example, uneven density appearing as a streak extending in the main scanning direction. The streak appears in a boundary area between adjacent unit images, each corresponding to a pass operation, in the subscanning direction on the recording material. This may lower the image quality. A technique for solving this issue is described in, for example, Patent Literature 1. The technique described in Patent Literature 1 generates data of the pattern of ink dots for forming unit images, and the boundary between the unit images is defined by end dots in the subscanning direction that are arranged in a nonlinear manner.

### CITATION LIST

### PATENT LITERATURE

Patent Literature 1: Japanese Patent No. 5065719

US 2015/0015626 A1 discloses multi-pass recording that is executed for each of n types of super cell regions that are each defined as a region that contains pixel positions in which recording of dots is performed in various types of main scan passes of n types of main scan passes, wherein the n types of super cell regions (i) include a boundary portion that is not parallel to either a main scanning direction or a sub-scanning direction in at least a portion of a boundary of the individual super cell regions, and (ii) are arranged such that the boundary of the n types of super cell regions appears periodically repeating along both the main scanning direction and the sub-scanning direction.

US 2010/110131 A1 discloses a printer and a printing method, wherein print data composed of a multiplicity of dot information is supplied to a printing head having a plurality of dot forming elements arrayed in a sub-scanning direction.

### SUMMARY

The present invention provides an inkjet recording system according to claim 1 and an inkjet recording method according to claim 8. Preferred embodiments are described in the dependent claims.

### BRIEF DESCRIPTION OF THE DRAWINGS

FIG. 1 is a diagram of an inkjet recording system according to an embodiment of the present invention, illustrating its overall structure.
FIG. 2 is a diagram describing an image formation operation performed in the inkjet recording system.
FIG. 3 is a flowchart of an inkjet recording method, showing its procedure.

recording material in a manner arranged in a subscanning direction perpendicular to the main scanning direction by repeatedly performing a pass operation and a feed operation. The pass operation is an operation to cause the ink head to eject ink while moving the ink head in the main scanning direction to form a plurality of ink dots on the recording material. The feed operation is an operation to feed the recording material in the subscanning direction. The plurality of unit images each corresponds to the pass operation performed at least once and includes the plurality of ink dots. Generating the ink dot data includes generating the ink dot data for each pass operation. The ink dot data indicates a pattern of the plurality of ink dots for forming each of the plurality of unit images on the recording material. Forming the plurality of unit images includes performing the pass operation and the feed operation to form a boundary area on the recording material. The boundary area corresponds to a partial overlap between adjacent unit images of the plurality of unit images in the subscanning direction, and extends in the main scanning direction. Generating the ink dot data includes setting a position, in the subscanning direction, of each of a plurality of boundary end dots arranged in the main scanning direction to a position based on one of a plurality of pattern waveforms having a wavelength corresponding to the main scanning direction and an amplitude corresponding to the subscanning direction and differing from each other in phase. The plurality of boundary end dots defines a boundary between the adjacent unit images in the subscanning direction on the recording material. The plurality of boundary end dots is included in boundary area dots for forming the boundary area. The boundary area dots are included in the plurality of ink dots included in the ink dot data for each pass operation. In the above aspect of the present invention, the inkjet recording method reduces deterioration in the quality of images formed on the recording material.

### BRIEF DESCRIPTION OF THE DRAWINGS

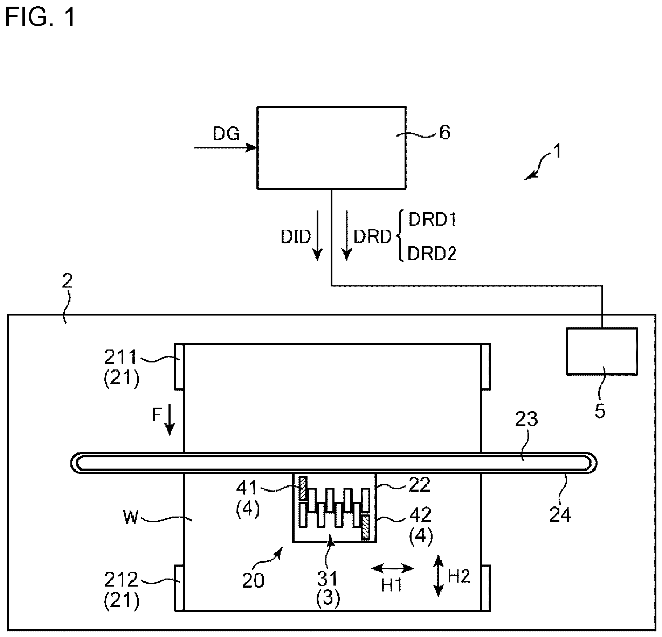

FIG. 1 is a diagram of an inkjet recording system according to an embodiment of the present invention, illustrating its overall structure.

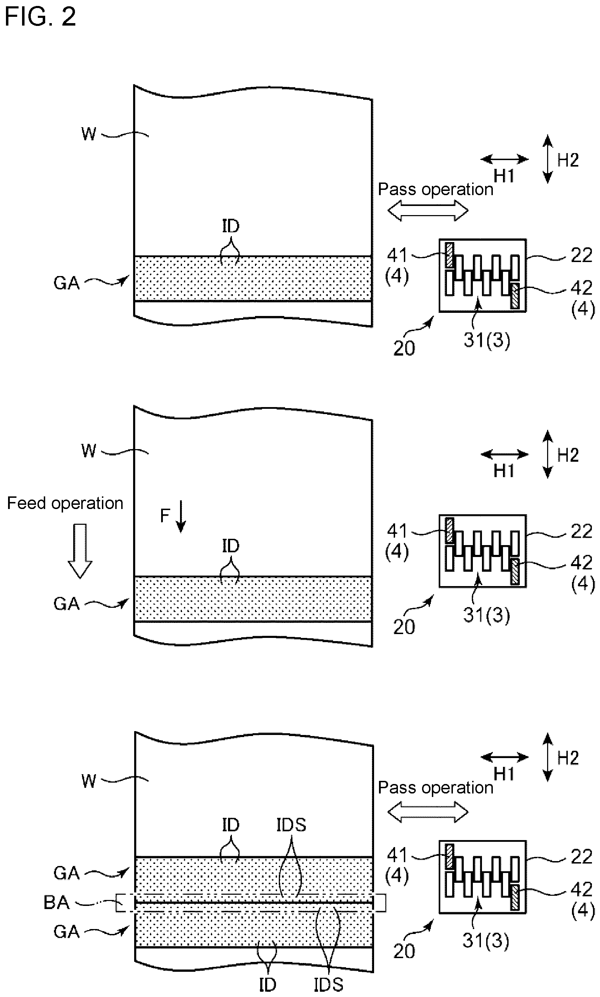

FIG. 2 is a diagram describing an image formation operation performed in the inkjet recording system.

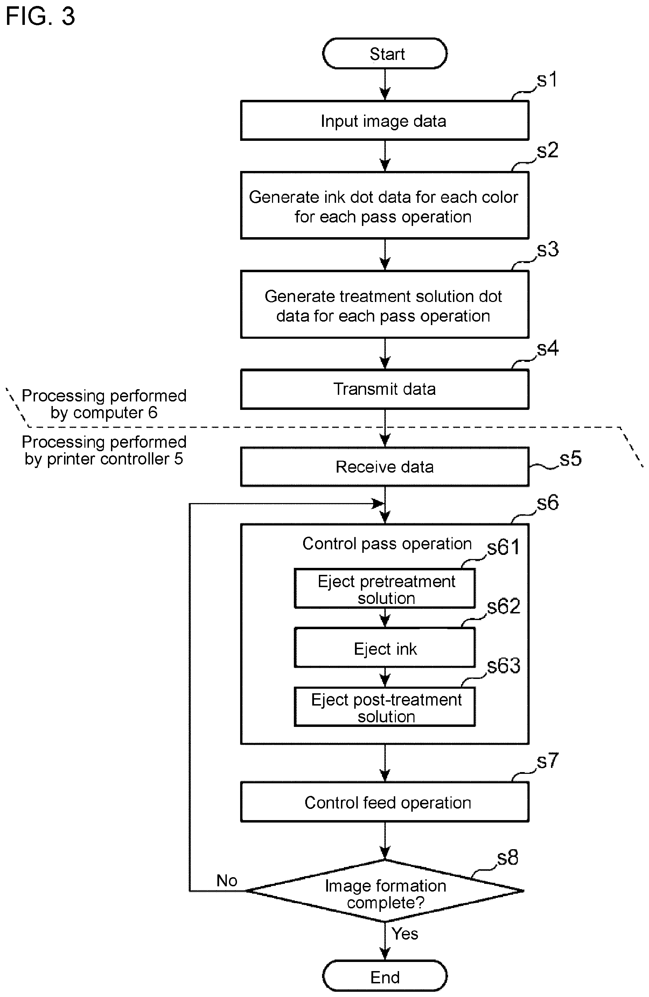

FIG. 3 is a flowchart of an inkjet recording method, showing its procedure.

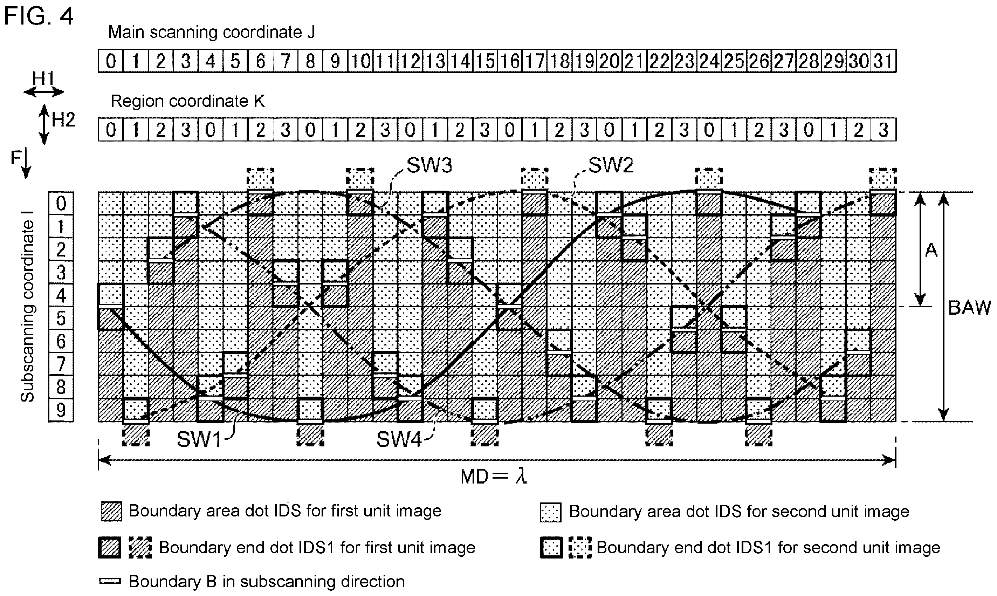

FIG. 4 is a diagram describing a process of generating ink dot data in the inkjet recording system.

### DESCRIPTION OF EMBODIMENTS

The technique described in Patent Literature 1 described above reduces the likelihood that the end dots in the subscanning direction are arranged linearly in the main scanning direction. The technique may thus reduce uneven density appearing in a linear pattern in the main scanning direction. However, the end dots in the subscanning direction, which are arranged nonlinearly along a single waveform, may cause uneven density appearing as a streak along the single waveform in the boundary area between the unit images.

An inkjet recording system and an inkjet recording method are thus awaited to reduce deterioration in the quality of images formed on a recording material.

An inkjet recording system according to one or more embodiments of the present invention will now be described with reference to the drawings. In one or more embodiments below, a system including an inkjet printer including an ink head that can eject ink for forming an image onto a wide and long recording material will be described as a specific example of the inkjet recording system. The inkjet printer may be used for digital textile printing to print (record) images such as letters or patterns by inkjet printing on a recording material that is a fabric member made of fabric such as woven fabric or knitted fabric. The inkjet printer included in the inkjet recording system according to one or more embodiments of the present invention may also be used for printing various images on a recording material such as a paper sheet or a resin sheet.

As illustrated in FIG. 1, an inkjet recording system 1 includes an inkjet printer 2 and a computer 6 connected to the inkjet printer 2 to allow data communication with the inkjet printer 2. FIG. 1 schematically illustrates the structure of the inkjet printer 2 as viewed from above. In the inkjet recording system 1, the computer 6 functions as a dot data generator that generates ink dot data DID based on image data DG of an image to be printed on a medium W that is a recording material, and generates treatment liquid dot data DRD. The inkjet printer 2 prints an image on the medium W by inkjet printing based on the ink dot data DID and the treatment liquid dot data DRD generated by the computer 6. Note that, in the inkjet recording system 1, the computer 6 may be incorporated in the inkjet printer 2. In other words, the inkjet printer 2 may function as a dot data generator in addition to printing an image on the medium W by inkjet printing.

The inkjet printer 2 prints an image on a wide and long medium W by inkjet printing. The inkjet printer 2 includes an inkjet head 20 including an ink head 3 and a treatment liquid head 4, a feeder 21 that can feed the medium W in a feed direction F, and a carriage 22 on which the inkjet head 20 is mounted.

The inkjet printer 2 is a serial printer that performs a printing process on the medium W by serial printing. As illustrated in FIG. 2, in the serial-printing inkjet printer 2, a pass operation and a feed operation are repeatedly performed. In the pass operation, the ink head 3 ejects ink while the carriage 22 is reciprocating in a main scanning direction H1 to form multiple ink dots ID on the medium W. In the feed operation, the medium W is fed in the feed direction F parallel to a subscanning direction H2 perpendicular to the main scanning direction H1 in a horizontal plane. This forms multiple strips of unit images GA on the medium W in a manner arranged in the subscanning direction H2. Each of the unit images GA corresponds to the pass operation performed at least once and includes multiple ink dots ID. The unit images GA extend in the main scanning direction H1. In the pass operation, a treatment liquid may be ejected from the treatment liquid head 4. The feed operation is performed by the feeder 21. The pass operation and the feed operation may be repeated alternately, or performed one by one in sequence.

The feeder 21 includes a feed roller 211 that unwinds the medium W before printing, and a take-up roller 212 that winds the medium W after printing. The feed roller 211 is located at the upstream end in the feed direction F. The feed roller 211 is a shaft supporting a wound roll of the medium W before printing. The take-up roller 212 is located at the downstream end in the feed direction F. The take-up roller 212 is a shaft supporting a wound roll of the medium W after printing. The take-up roller 212 includes a drive such as a motor that rotates the take-up roller 212 about its axis to wind the medium W. The feeder 21 feeds the medium W in the feed direction F as the feed roller 211 rotates in response to the take-up roller 212 being rotated.

The carriage 22, which carries the ink head 3 and the treatment liquid head 4 included in the inkjet head 20, can reciprocate in the main scanning direction H1 perpendicular to the feed direction F. The carriage 22 is fixed to a timing belt 24 rotatable around a carriage guide 23 that is a flat plate elongated in the main scanning direction H1. The timing belt 24 is an endless belt that is driven to rotate in the main scanning direction H1 around the carriage guide 23. As the timing belt 24 rotates in the main scanning direction H1, the carriage 22 reciprocates in the main scanning direction H1 along the carriage guide 23.

Each of the ink head 3 and the treatment liquid head 4 mounted on the carriage 22 moves relative to the medium W in the main scanning direction H1 and in the subscanning direction H2 when the carriage 22 reciprocates in the main scanning direction H1 with the medium W being fed by the feeder 21 in the feed direction F.

In the present embodiment, the ink head 3 includes multiple individual heads 31 that can eject the respective colors of ink. The multiple individual heads 31 are mounted on the carriage 22. Each of the multiple individual heads 31 includes many nozzles, ink channels that guide ink into the nozzles, and a wiring board that controls an ejection operation of ink. The nozzles eject ink droplets by, for example, piezoelectric ejection using piezoelectric elements or thermal ejection using heating elements. Examples of the ink include water-based pigment ink containing a water-based solvent, a pigment, and a bonding resin. The multiple individual heads 31 are mounted on the carriage 22 in two arrays in the main scanning direction H1. Two individual heads 31 are used for each of the colors. The two individual heads 31 that eject the same color of ink are arranged on the carriage 22 in a manner displaced from each other in the main scanning direction H1 and in the subscanning direction H2. In another embodiment, a single ink head 3 may be mounted on the carriage 22.

In the present embodiment, the treatment liquid head 4 includes a pretreatment liquid head 41 and a post-treatment liquid head 42 on the carriage 22. The pretreatment liquid head 41 and the post-treatment liquid head 42 are at positions different from the position of the ink head 3 on the carriage 22 in the feed direction F parallel to the subscanning direction H2. The pretreatment liquid head 41 is located upstream from the ink head 3 on the carriage 22 in the feed direction F. In the example in FIG. 1, a single pretreatment liquid head 41 is located near one end of an array of the individual heads 31 in the ink head 3 in the main scanning direction H1. The post-treatment liquid head 42 is located downstream from the ink head 3 on the carriage 22 in the feed direction F. In the example in FIG. 1, a single post-treatment liquid head 42 is located near the other end of an array of the individual heads 31 in the ink head 3 in the main scanning direction H1. In another embodiment, the treatment liquid head 4 may include one of the pretreatment liquid head 41 or the post-treatment liquid head 42 on the carriage 22.

The pretreatment liquid head 41 includes many nozzles, pretreatment liquid channels that guide a pretreatment liquid into the nozzles, and a wiring board that controls an ejection operation of the pretreatment liquid. The nozzles eject droplets of the pretreatment liquid by, for example, piezoelectric ejection using piezoelectric elements or thermal ejection using heating elements. The pretreatment liquid head 41 ejects the pretreatment liquid on an area of the medium W on which ink is yet to be ejected from the ink head 3. The pretreatment liquid is applied to the medium W before the ink. The pretreatment liquid is a noncolor-developing treatment liquid that comes in contact with undried ink on the medium W and develops no color on the medium W. The pretreatment liquid prevents ink from blurring on the medium W. Examples of the pretreatment liquid may include a treatment liquid of a solvent containing a bonding resin and a treatment liquid of a solvent containing a positively charged cationic resin.

The post-treatment liquid head 42 includes many nozzles, post-treatment liquid channels that guide a post-treatment liquid into the nozzles, and a wiring board that controls an ejection operation of the post-treatment liquid. The nozzles eject droplets of the post-treatment liquid by, for example, piezoelectric ejection using piezoelectric elements or thermal ejection using heating elements. The post-treatment liquid head 42 ejects the post-treatment liquid on an area of the medium W on which ink has been ejected from the ink head 3. The post-treatment liquid is applied to the medium W after the ink. The post-treatment liquid is a noncolor-developing treatment liquid that comes in contact with undried ink on the medium W and develops no color on the medium W. The post-treatment liquid can improve fixation of the ink on the medium W. Examples of the post-treatment liquid include a silicone treatment liquid. Note that the post-treatment liquid differs from the pretreatment liquid. More specifically, the post-treatment liquid and the pretreatment liquid contain different components.

The noncolor-developing treatment liquid refers to a liquid that is not perceptible as having developed a color to the naked eye when printed on the medium W alone. The color includes any color with zero saturation, such as black, white, and gray. The noncolor-developing treatment liquid is basically a transparent liquid but may appear slightly white or another color. Such a faint color is not perceptible as having developed a color to the naked eye when printed on the medium W alone. Note that, although a type of treatment liquid printed alone on the medium W may cause a change such as adding gloss to the medium W, such a change is not referred to as developing a color.

As illustrated in FIG. 1, the inkjet printer 2 further includes a printer controller 5. The printer controller 5 is a controller that controls the pass operation performed by the inkjet head 20 including the ink head 3 and the treatment liquid head 4 on the carriage 22, and the feed operation performed by the feeder 21 for feeding the medium W. The printer controller 5 uses the data generated by the computer 6 (described later) to perform an image formation process by repeatedly performing the pass operation and the feed operation. In the pass operation, the printer controller 5 causes the ink head 3 to eject ink and causes the treatment liquid head 4 to eject the treatment liquid while moving the carriage 22 in the main scanning direction H1. In the feed operation, the printer controller 5 causes the feeder 21 to feed the medium W in the feed direction F parallel to the subscanning direction H2. The printer controller 5 thus forms, as illustrated in FIG. 2, multiple unit images GA on the medium W in a manner arranged in the subscanning direction H2. Each of the multiple unit images GA corresponds to the pass operation performed at least once and includes multiple ink dots ID. In the image formation process, the printer controller 5 performs the pass operation and the feed operation to form a boundary area BA on the medium W. The boundary area BA corresponds to a partial overlap between the adjacent unit images GA in the subscanning direction H2, and extends in the main scanning direction H1. Among the ink dots ID for forming each of the adjacent unit images GA in the subscanning direction H2, the ink dots ID for forming the boundary area BA are referred to as boundary area dots IDS. The boundary area BA includes both the boundary area dots IDS for one of the adjacent unit images GA and the boundary area dots IDS for the other of the adjacent unit images GA arranged in the main scanning direction H1. Such a boundary area BA formed on the medium W is less likely to have, for example, a streak caused by a gap between the adjacent unit images GA in the subscanning direction H2.

The printer controller 5 sets the feed length of the medium W per pass operation in the feed operation performed by the feeder 21 to a length corresponding to a value obtained by dividing the difference between the effective pixel width of the ink head 3 and the boundary area width of the boundary area BA by the number of pass operations for forming the unit image GA. The effective pixel width of the ink head 3 is indicated by the number of dots corresponding to the number of nozzles arranged in the subscanning direction H2 among the multiple nozzles included in the ink head 3. The boundary area width is the width of the boundary area BA in the subscanning direction H2 and indicated by the number of boundary area dots IDS arranged in the subscanning direction H2 within the boundary area BA.

For example, when the unit image GA is formed with a single pass operation, the printer controller 5 sets the feed length of the medium W per pass operation in the feed operation performed by the feeder 21 to a length corresponding to a value obtained by dividing the difference between the effective pixel width of the ink head 3 and the boundary area width of the boundary area BA by "1", which is the number of pass operations for forming the unit image GA. In this case, the boundary areas BA between adjacent unit images GA of the multiple unit images GA that are continuous in the subscanning direction H2 on the medium W are formed by the combination of the first pass operation and the second pass operation, the combination of the second pass operation and the third pass operation, and in a similar pattern subsequently.

When the unit image GA is formed with two pass operations, the printer controller 5 sets the feed length of the medium W per pass operation in the feed operation performed by the feeder 21 to a length corresponding to a value obtained by dividing the difference between the effective pixel width of the ink head 3 and the boundary area width of the boundary area BA by "2", which is the number of pass operations for forming the unit image GA. In this case, the boundary areas BA between adjacent unit images GA of the multiple unit images GA that are continuous in the subscanning direction H2 on the medium W are formed by the combination of the first pass operation and the third pass operation, the combination of the second pass operation and the fourth pass operation, and in a similar pattern subsequently.

When the unit image GA is formed with four pass operations, the printer controller 5 sets the feed length of the medium W per pass operation in the feed operation performed by the feeder 21 to a length corresponding to a value obtained by dividing the difference between the effective pixel width of the ink head 3 and the boundary area width of the boundary area BA by "4", which is the number of pass operations for forming the unit image GA. In this case, the boundary areas BA between adjacent unit images GA of the multiple unit images GA that are continuous in the subscanning direction H2 on the medium W are formed by the combination of the first pass operation and the fifth pass operation, the combination of the second pass operation and the sixth pass operation, the combination of the third pass operation and the seventh pass operation, the combination of the fourth pass operation and the eighth pass operation, and in a similar pattern subsequently.

As described above, the combination of pass operations for forming the boundary area BA between the adjacent unit images GA in the subscanning direction H2 on the medium W is uniquely determined by the number of pass operations for forming each of the unit images GA.

The computer 6 is a personal computer including a central processing unit (CPU), a storage area that stores a processing program, such as a hard disk drive (HDD) or a flash memory, and a random-access memory (RAM) used as a work area for the CPU. The computer 6 executes the processing program stored in the HDD or the flash memory with the CPU to function as the dot data generator that performs an ink data generation process of generating the ink dot data DID and performs a treatment-liquid data generation process of generating the treatment liquid dot data DRD including pretreatment liquid dot data DRD1 and post-treatment liquid dot data DRD2.

In the ink data generation process, the computer 6 generates the ink dot data DID used by the printer controller 5 to control the ejection of ink from the ink head 3 for each pass operation. In the treatment-liquid data generation process, the computer 6 generates the treatment liquid dot data DRD used by the printer controller 5 to control the ejection of the treatment liquid from the treatment liquid head 4 for each pass operation.

In the inkjet recording system 1 according to the present embodiment, the printer controller 5 and the computer 6 perform processing in each step included in the inkjet recording method. The processing in each step included in the inkjet recording method performed by the printer controller 5 and the computer 6 will now be described in detail with reference to FIGs. 2 to 4.

An image formed by serial printing illustrated in FIG. 2 under the control of the printer controller 5 may have, for example, uneven density appearing as a streak extending in the main scanning direction H1. The streak appears in the boundary area BA between the adjacent unit images GA in the subscanning direction H2 on the medium W. This may lower the image quality. In the inkjet recording system 1 according to the present embodiment, the computer 6 generates the ink dot data DID to reduce uneven density appearing as a streak in the boundary area BA between the unit images GA.

More specifically, the computer 6 obtains image data DG of an image to be printed on the medium W (an image data obtaining step s1). Upon obtaining the image data DG, the computer 6 performs the ink data generation process of generating the ink dot data DID for each pass operation based on the image data DG (an ink data generation step s2). The ink dot data DID indicates the pattern of multiple ink dots ID for forming each of the multiple unit images GA on the medium W with ink ejected from the ink head 3. The computer 6 performs a halftone process, such as dithering, on the image data DG to convert the image data DG to halftone image data that can be printed on the medium W by the inkjet printer 2. The computer 6 thus generates the ink dot data DID at a resolution that can be printed by the inkjet printer 2.

To generate the ink dot data DID for each pass operation, as illustrated in FIG. 4, the computer 6 sets the position, in the subscanning direction H2, of each of multiple boundary end dots IDS1 arranged in the main scanning direction H1 to a position based on one of multiple pattern waveforms SW1, SW2, SW3, and SW4 that differ from each other in phase. The multiple boundary end dots IDS1 are included in the boundary area dots IDS for forming the boundary area BA between the adjacent unit images GA in the subscanning direction H2, among the multiple ink dots ID included in the ink dot data DID for each pass operation. The multiple boundary end dots IDS1 arranged in the main scanning direction H1, among the boundary area dots IDS for forming the boundary area BA, define a boundary B between the adjacent unit images GA in the subscanning direction H2 on the medium W.

FIG. 4 illustrates the boundary area dots IDS for forming the boundary area BA between the adjacent unit images GA in the subscanning direction H2 in the multiple ink dots ID included in the ink dot data DID for each pass operation. More specifically, FIG. 4 illustrates the boundary area dots IDS for forming the boundary area BA between a first unit image GA and a second unit image GA upstream from and adjacent to the first unit image GA in the feed direction F. The boundary area BA includes both the boundary area dots IDS corresponding to the first unit image GA and the boundary area dots IDS corresponding to the second unit image GA arranged in the main scanning direction H1. As described above, the combination of pass operations for forming the boundary area BA between the first unit image GA and the second unit image GA is uniquely determined by the number of pass operations for forming each of the unit images GA. The boundary area dots IDS for the first unit image GA are shaded with multiple diagonal lines. The boundary area dots IDS for the second unit image GA are shaded with multiple dots. The boundary area dots IDS for the first unit image GA include the multiple boundary end dots IDS1 arranged in the main scanning direction H1 and defining the boundary B between the first unit image GA and the second unit image GA in the subscanning direction H2. Among these boundary end dots IDS1, the boundary end dots IDS1 located inside the boundary area BA are shaded with multiple diagonal lines and outlined with bold solid lines, and the boundary end dots IDS1 located outside the boundary area BA are shaded with multiple diagonal lines and outlined with bold broken lines. In the same or similar manner, the boundary area dots IDS for the second unit image GA include the multiple boundary end dots IDS1 arranged in the main scanning direction H1 and defining the boundary B between the first unit image GA and the second unit image GA in the subscanning direction H2. Among these boundary end dots IDS1, the boundary end dots IDS1 located inside the boundary area BA are shaded with multiple dots and outlined with bold solid lines, and the boundary end dots IDS1 located outside the boundary area BA are shaded with multiple dots and outlined with bold broken lines.

On the medium W, the boundary B between the first unit image GA and the second unit image GA adjacent to each other in the subscanning direction H2 is defined by the boundary end dots IDS1 at the most upstream position in the feed direction F among the positions of the boundary area dots IDS corresponding to the first unit image GA in the main scanning direction H1 and defined by the boundary end dots IDS1 at the most downstream position in the feed direction F among the positions of the boundary area dots IDS corresponding to the second unit image GA in the main scanning direction H1.

The position of each of the multiple boundary end dots IDS1 arranged in the main scanning direction H1 is defined by a main scanning coordinate J that is a coordinate on a coordinate axis parallel to the main scanning direction H1. In the example in FIG. 4, a group of 32 main scanning coordinates J, or specifically, "0, 1, 2, ..., 29, 30, 31" is illustrated. In the same or similar manner, the position of each of the multiple boundary end dots IDS1 in the subscanning direction H2 is defined by a subscanning coordinate I that is a coordinate on a coordinate axis parallel to the subscanning direction H2. In the example in FIG. 4, a group of 10 subscanning coordinates I, or specifically, "0, 1, 2, ..., 7, 8, 9" is illustrated within a boundary area width BAW that is the width of the boundary area BA between the unit images GA in the subscanning direction H2 on the medium W.

The computer 6 uses the multiple pattern waveforms SW1, SW2, SW3, and SW4 that differ from each other in phase to set the position, in the subscanning direction H2, of each of the multiple boundary end dots IDS1 arranged in the main scanning direction H1. The pattern waveforms SW1, SW2, SW3, and SW4 have cyclically changing patterns with a wavelength λ corresponding to the main scanning direction H1 and an amplitude A corresponding to the subscanning direction H2. Examples of the wave with the multiple pattern waveforms SW1, SW2, SW3, and SW4 include a sine wave, a rectangular wave, a triangular wave, and a sawtooth wave. The waves with the multiple pattern waveforms SW1, SW2, SW3, and SW4 may be different or the same. The number of pattern waveforms SW1, SW2, SW3, and SW4 may be any number greater than or equal to "2". In the example in FIG. 4, the computer 6 sets the position, in the subscanning direction H2, of each of the multiple boundary end dots IDS1 arranged in the main scanning direction H1 to a position based on one of the four pattern waveforms SW1, SW2, SW3, and SW4. The multiple boundary end dots IDS1 are included in the boundary area dots IDS for forming the boundary area BA, among the multiple ink dots ID included in the ink dot data DID for each pass operation. The pattern waveforms SW1, SW2, SW3, and SW4 are the waveforms of a sine wave that differ from each other in phase α as expressed by Formula 1 below.$y \left(t\right) = A sin \left(ωt+α\right)$ (1)

In Formula 1 for the sine wave with the multiple pattern waveforms SW1, SW2, SW3, and SW4, "A" is the amplitude, "ω" is the angular frequency, and "α" is the phase.

The wavelength λ of the multiple pattern waveforms SW1, SW2, SW3, and SW4 is set to, for example, a value corresponding to a movement distance MD per unit time of the carriage 22 in the main scanning direction H1. The movement distance MD per unit time of the carriage 22 is indicated by the number of boundary area dots IDS arranged in the main scanning direction H1. In the example in FIG. 4, the movement distance MD per unit time of the carriage 22 is indicated by "32", which is the number of boundary area dots IDS arranged in the main scanning direction H1. Thus, the wavelength λ of the multiple pattern waveforms SW1, SW2, SW3, and SW4 is indicated by "32", which is the number of boundary area dots IDS arranged in the main scanning direction H1. The wavelength λ of the multiple pattern waveforms SW1, SW2, SW3, and SW4 is set to a multiple of the number of pattern waveforms SW1, SW2, SW3, and SW4. For example, when the number of pattern waveforms SW1, SW2, SW3, and SW4 is "4", the wavelength λ of the pattern waveforms SW1, SW2, SW3, and SW4 is set to "32", which is a multiple of "4".

The amplitude A of the multiple pattern waveforms SW1, SW2, SW3, and SW4 is set to, for example, a value corresponding to half the boundary area width BAW that is the width of the boundary area BA between the unit images GA in the subscanning direction H2 on the medium W. The boundary area width BAW is indicated by the number of boundary area dots IDS arranged in the subscanning direction H2 in the boundary area BA. In the example in FIG. 4, the boundary area width BAW is indicated by "10", which is the number of boundary area dots IDS arranged in the subscanning direction H2 in the boundary area BA. Thus, the amplitude A of the multiple pattern waveforms SW1, SW2, SW3, and SW4 is indicated by "5", which is half the number "10" of the boundary area dots IDS arranged in the subscanning direction H2 in the boundary area BA.

The difference in phase α between the multiple pattern waveforms SW1, SW2, SW3, and SW4 is set to a value obtained by dividing 2π by the number of pattern waveforms SW1, SW2, SW3, and SW4. For example, when the number of pattern waveforms SW1, SW2, SW3, and SW4 is "4", the difference in phase α between the multiple pattern waveforms SW1, SW2, SW3, and SW4 is "2π/4".

As described above, the computer 6 sets the position, in the subscanning direction H2, of each of the multiple boundary end dots IDS1 arranged in the main scanning direction H1 to a position based on one of the multiple pattern waveforms SW1, SW2, SW3, and SW4 that differ from each other in phase α. The multiple boundary end dots IDS1 are included in the boundary area dots IDS for forming the boundary area BA, among the multiple ink dots ID included in the ink dot data DID for each pass operation. This reduces the likelihood that adjacent dots of the multiple boundary end dots IDS1 in the main scanning direction H1, which define the boundary B between the adjacent unit images GA in the subscanning direction H2 on the medium W, are arranged linearly in the main scanning direction H1 or along a single waveform, among the multiple ink dots ID included in the ink dot data DID for each pass operation. The multiple boundary end dots IDS1 are thus randomly distributed in the subscanning direction H2. This reduces, for example, uneven density appearing as a streak in the boundary area BA between the unit images GA on the medium W caused by multiple boundary end dots IDS1, thus reducing deterioration in the quality of images formed on the medium W.

The multiple pattern waveforms SW1, SW2, SW3, and SW4 that differ from each other in phase α may have the same wavelength λ and the same amplitude A. When the multiple pattern waveforms SW1, SW2, SW3, and SW4 have the same wavelength λ, their periods are also the same. The position of each of the multiple boundary end dots IDS1 in the subscanning direction H2 is thus set to a position based on one of the multiple pattern waveforms SW1, SW2, SW3, and SW4 having the same wavelength λ, the same amplitude A, and the same period, but differing from each other in phase α. This reduces interference fringes appearing in the boundary area BA between the unit images GA on the medium W.

The process performed by the computer 6 to set the position of each of the multiple boundary end dots IDS1 in the subscanning direction H2 to a position based on one of the multiple pattern waveforms SW1, SW2, SW3, and SW4 will now be described in more detail with reference to FIG. 4. The multiple pattern waveforms SW1, SW2, SW3, and SW4 may be hereafter referred to as a first pattern waveform SW1, a second pattern waveform SW2, a third pattern waveform SW3, and a fourth pattern waveform SW4 to be distinguished from each other.

The computer 6 sets the position of each of the multiple boundary end dots IDS1 in the subscanning direction H2 to a position based on one of the multiple pattern waveforms SW1, SW2, SW3, and SW4 that differ from each other in phase α to reduce the likelihood that the multiple boundary end dots IDS1, which define the boundary B between the adjacent unit images GA in the subscanning direction H2 on the medium W, are arranged along a single waveform. In this case, the positions, in the subscanning direction H2, of all pairs of adjacent boundary end dots IDS1 in the main scanning direction H1 may not be positions based on the different pattern waveforms SW1, SW2, SW3, and SW4. More specifically, when the computer 6 sets the position of each of the multiple boundary end dots IDS1 in the subscanning direction H2 to a position based on one of the multiple pattern waveforms SW1, SW2, SW3, and SW4, the computer 6 may permit the positions, in the subscanning direction H2, of the adjacent boundary end dots IDS1 in the main scanning direction H1 to be positions based on the same pattern waveform in a partial area in the main scanning direction H1.

In the present embodiment, the computer 6 may set the position of each of the multiple boundary end dots IDS1 in the subscanning direction H2 to cause the positions, in the subscanning direction H2, of the adjacent boundary end dots IDS1 in the main scanning direction H1 to be positions based on the different pattern waveforms SW1, SW2, SW3, and SW4. For example, for the boundary end dot IDS1 with the main scanning coordinate J of "0" among the multiple boundary end dots IDS1 corresponding to the first unit image GA, the computer 6 sets the subscanning coordinate I defining the position in the subscanning direction H2 to "5" based on the first pattern waveform SW1. For the boundary end dot IDS 1 with the main scanning coordinate J of "1" adjacent to "0", the computer 6 sets the subscanning coordinate I to "10", which is subsequent to "9" based on the second pattern waveform SW2 that differs in phase α from the first pattern waveform SW1. In the same or similar manner, for the boundary end dot IDS1 with the main scanning coordinate J of "0" among the multiple boundary end dots IDS1 corresponding to the second unit image GA, the computer 6 sets the subscanning coordinate I defining the position in the subscanning direction H2 to "4" based on the first pattern waveform SW1. For the boundary end dot IDS1 with the main scanning coordinate J of "1" adjacent to "0", the computer 6 sets the subscanning coordinate I to "9" based on the second pattern waveform SW2 that differs in phase α from the first pattern waveform SW1. The computer 6 repeatedly performs the above process to set the position of each of the multiple boundary end dots IDS1 in the subscanning direction H2 to cause the positions, in the subscanning direction H2, of the adjacent boundary end dots IDS1 in the main scanning direction H1 to be positions based on the different pattern waveforms SW1, SW2, SW3, and SW4 for the multiple boundary end dots IDS1 corresponding to each of the first and second unit images GA. This allows the multiple boundary end dots IDS1 to be randomly distributed in the subscanning direction H2 more effectively. This more reliably reduces, for example, uneven density appearing as a streak in the boundary area BA between the unit images GA on the medium W caused by multiple boundary end dots IDS1.

The computer 6 may divide the group of main scanning coordinates J that define the position of each of the multiple boundary end dots IDS1 in the main scanning direction H1 into multiple regions each including coordinates equal in number to the pattern waveforms SW1, SW2, SW3, and SW4. In the example in FIG. 4, the computer 6 divides the group of 32 main scanning coordinates J, or specifically, "0, 1, 2, ..., 29, 30, 31", into "8" regions. Each of the "8" regions includes "4" coordinates equal in number to the pattern waveforms SW1, SW2, SW3, and SW4. In this case, the computer 6 sets region coordinates K corresponding to the main scanning coordinates J. More specifically, "4" region coordinates K are set for each of the "8" regions. Each of the "8" regions includes "4" region coordinates K, or specifically, "0, 1, 2, 3". In other words, the coordinates "0, 1, 2, 3" are repeated as many times as the number of divisional regions, and the region coordinates K corresponding to the main scanning coordinates J are "0, 1, 2, 3, ..., 0, 1, 2, 3".

When the computer 6 divides the group of main scanning coordinates J into multiple regions and sets the region coordinates K for the regions, the computer 6 sets the position of each of the multiple boundary end dots IDS1 in the subscanning direction H2 to cause the positions, in the subscanning direction H2, of the boundary end dots IDS 1 corresponding to each of the multiple regions to be positions based on the different pattern waveforms SW1, SW2, SW3, and SW4.

More specifically, for the boundary end dot IDS1 with the region coordinate K corresponding to the main scanning coordinate J being "0", the computer 6 sets the subscanning coordinate I defining the position in the subscanning direction H2 based on the first pattern waveform SW1. For the boundary end dot IDS1 with the region coordinate K corresponding to the main scanning coordinate J being "1", which is adjacent to "0", the computer 6 sets the subscanning coordinate I defining the position in the subscanning direction H2 based on the second pattern waveform SW2 that differs in phase α from the first pattern waveform SW1. For the boundary end dot IDS1 with the region coordinate K corresponding to the main scanning coordinate J being "2", which is adjacent to "1", the computer 6 sets the subscanning coordinate I defining the position in the subscanning direction H2 based on the third pattern waveform SW3 that differs in phase α from the first pattern waveform SW1 and the second pattern waveform SW2. For the boundary end dot IDS1 with the region coordinate K corresponding to the main scanning coordinate J being "3", which is adjacent to "2", the computer 6 sets the subscanning coordinate I defining the position in the subscanning direction H2 based on the fourth pattern waveform SW4 that differs in phase α from the first pattern waveform SW1, the second pattern waveform SW2, and the third pattern waveform SW3.

When the multiple pattern waveforms SW1, SW2, SW3, and SW4 are the waveforms of a sine wave, the computer 6 uses Formula 2 below to set the position of each of the multiple boundary end dots IDS1 in the subscanning direction H2.$I = round \left(\left(sin\left(2π\times \left(\frac{J}{λ}+\frac{K}{SWN}\right)\right)+1\right)\times A\right)$ (2)

In Formula 2, "I" is the subscanning coordinate I, "J" is the main scanning coordinate J, "K" is the region coordinate K, "SWN" is the number of pattern waveforms SW1, SW2, SW3, and SW4, "λ" is the wavelength λ of the multiple pattern waveforms SW1, SW2, SW3, and SW4, and "A" is the amplitude A of the multiple pattern waveforms SW1, SW2, SW3, and SW4. In Formula 2, "round" indicates rounding to the closest whole number.

For example, the number SWN of pattern waveforms SW1, SW2, SW3, and SW4 is "4", the wavelength λ is "32", and the amplitude A is "5". In this case, for the boundary end dot IDS1 with the main scanning coordinate J of "0" and the region coordinate K of "0", the computer 6 sets the subscanning coordinate I defining the position in the subscanning direction H2 to "5" based on the first pattern waveform SW1 using Formula 2 for the boundary end dot IDS1 corresponding to the first unit image GA, and sets the subscanning coordinate I to "4", which is adjacent to "5" in the subscanning direction H2, for the boundary end dot IDS1 corresponding to the second unit image GA. In the same or similar manner, for the boundary end dot IDS1 with the main scanning coordinate J of "1" adjacent to "0" and the region coordinate K of "1" adjacent to "0", the computer 6 sets the subscanning coordinate I to "10" based on the second pattern waveform SW2 using Formula 2 for the boundary end dot IDS1 corresponding to the first unit image GA, and sets the subscanning coordinate I to "9", which is adjacent to "10" in the subscanning direction H2, for the boundary end dot IDS1 corresponding to the second unit image GA. For the boundary end dot IDS1 with the main scanning coordinate J of "2" adjacent to "1" and the region coordinate K of "2" adjacent to "1", the computer 6 sets the subscanning coordinate I to "3" based on the third pattern waveform SW3 using Formula 2 for the boundary end dot IDS1 corresponding to the first unit image GA, and sets the subscanning coordinate I to "2", which is adjacent to "3" in the subscanning direction H2, for the boundary end dot IDS1 corresponding to the second unit image GA. Further, for the boundary end dot IDS1 with the main scanning coordinate J of "3" adjacent to "2" and the region coordinate K of "3" adjacent to "2", the computer 6 sets the subscanning coordinate I to "1" based on the fourth pattern waveform SW4 using Formula 2 for the boundary end dot IDS1 corresponding to the first unit image GA, and sets the subscanning coordinate I to "0", which is adjacent to "1" in the subscanning direction H2, for the boundary end dot IDS1 corresponding to the second unit image GA.

When the computer 6 divides the group of main scanning coordinates J into multiple regions and sets the region coordinates K for the regions, the computer 6 repeatedly performs the above process using Formula 2 for each of the regions to set the position, in the subscanning direction H2, of each of the multiple boundary end dots IDS1 to cause the positions, in the subscanning direction H2, of the boundary end dots IDS1 corresponding to each of the multiple regions to be positions based on the different pattern waveforms SW1, SW2, SW3, and SW4 for the multiple boundary end dots IDS1 corresponding to each of the first and second unit images GA. This allows the multiple boundary end dots IDS1 to be randomly distributed in the subscanning direction H2 more effectively. This more reliably reduces, for example, uneven density appearing as a streak in the boundary area BA between the unit images GA on the medium W caused by multiple boundary end dots IDS1.

When the ink head 3 in the inkjet printer 2 includes the multiple individual heads 31 that can eject the respective colors of ink, the computer 6 generates the ink dot data DID for each pass operation for each of the colors corresponding to the respective individual heads 31. The computer 6 sets the position, in the subscanning direction H2, of each of the multiple boundary end dots IDS1 in the ink dot data DID for each of the colors to a position based on one of the multiple pattern waveforms SW1, SW2, SW3, and SW4. In this case, the computer 6 changes at least one of the phase α or the wavelength λ of the multiple pattern waveforms SW1, SW2, SW3, and SW4 for the ink dot data DID for each of the colors. This reduces, for example, uneven density appearing as a streak in the boundary area BA between the unit images GA on the medium W caused by multiple boundary end dots IDS1 in a multicolor image formed on the medium W.

When the computer 6 sets the position, in the subscanning direction H2, of each of the multiple boundary end dots IDS1 in the ink dot data DID for each of the colors to a position based on one of the multiple pattern waveforms SW1, SW2, SW3, and SW4, the computer 6 may change at least one of the phase α or the wavelength λ of the multiple pattern waveforms SW1, SW2, SW3, and SW4 for the ink dot data DID for each of the colors to cause at least one of the phase α or the wavelength λ to differ between adjacent colors of the colors in a color wheel. Black, white, and gray, or a neutral color, are achromatic colors with no hue and no saturation among the three attributes of color, or brightness, hue, and saturation. Achromatic colors are thus typically not included in the color wheel. Thus, when the computer 6 uses the color wheel, the computer 6 uses chromatic colors other than achromatic colors.

As shown in FIG. 3, upon generating the ink dot data DID for each pass operation in the ink data generation process s2, the computer 6 performs the treatment-liquid data generation process of generating the treatment liquid dot data DRD based on the ink dot data DID for each pass operation (a treatment-liquid data generation step s3). The treatment liquid dot data DRD indicates the pattern of treatment liquid dots to be formed on the medium W with the treatment liquid ejected from the treatment liquid head 4. The computer 6 generates, as the treatment liquid dot data DRD, pretreatment liquid dot data DRD1 indicating the pattern of pretreatment liquid dots to be formed on the medium W with the pretreatment liquid ejected from the pretreatment liquid head 41. In the same or similar manner, the computer 6 generates, as the treatment liquid dot data DRD, post-treatment liquid dot data DRD2 indicating the pattern of post-treatment liquid dots to be formed on the medium W with the post-treatment liquid ejected from the post-treatment liquid head 42. In the present embodiment, the computer 6 generates the pretreatment liquid dot data DRD1 and the post-treatment liquid dot data DRD2 that are the same treatment liquid dot data DRD.

The computer 6 generates the treatment liquid dot data DRD including the treatment liquid dots at least at the same positions as the respective ink dots ID in the ink dot data DID. When the ink head 3 in the inkjet printer 2 includes the multiple individual heads 31 that can eject the respective colors of ink, the computer 6 generates the treatment liquid dot data DRD based on logical OR data indicating the logical OR of the pieces of the ink dot data DID for the respective colors. In this case, the computer 6 generates the treatment liquid dot data DRD including the treatment liquid dots at least at the same positions as the respective ink dots ID in the logical OR data. Note that the computer 6 may generate the treatment liquid dot data DRD based on the image data DG.

The computer 6 generates the treatment liquid dot data DRD including the treatment liquid dots at the same positions as the respective ink dots ID in the ink dot data DID and also in areas around the respective ink dots ID. In this case, in the same manner as or in a similar manner to the ink dot data DID, the computer 6 may set the positions, in the subscanning direction H2, of the treatment liquid dots corresponding to the multiple boundary end dots IDS1 included in the ink dot data DID, among the multiple treatment liquid dots included in the treatment liquid dot data DRD, to positions based on corresponding pattern waveforms of the multiple pattern waveforms SW1, SW2, SW3, and SW4.

Upon generating the ink dot data DID and the treatment liquid dot data DRD for each pass operation, the computer 6 transmits the generated ink dot data DID and the generated treatment liquid dot data DRD to the inkjet printer 2 (a data transmission step s4).

When the inkjet printer 2 receives the ink dot data DID and the treatment liquid dot data DRD (a data reception step s5), the printer controller 5 repeatedly performs a pass operation step s6 and a feed step s7. In the pass operation step s6, the printer controller 5 causes the inkjet head 20 including the ink head 3 and the treatment liquid head 4 on the carriage 22 to perform the pass operation. In the feed step s7, the printer controller 5 causes the feeder 21 to perform the feed operation of the medium W. The printer controller 5 thus performs the image formation process of forming multiple unit images GA on the medium W in a manner arranged in the subscanning direction H2. Each of the multiple unit images GA corresponds to the pass operation performed at least once and includes multiple ink dots ID. The printer controller 5 determines whether the image formation on the medium W is complete (a determination step s8). The printer controller 5 repeatedly performs the pass operation step s6 and the feed step s7 until the image formation is complete.

In the pass operation step s6, the printer controller 5 causes the pretreatment liquid head 41 to eject the pretreatment liquid (step s61), causes the ink head 3 to eject the ink (step s62), and causes the post-treatment liquid head 42 to eject the post-treatment liquid (step s63) while moving the carriage 22 in the main scanning direction H1 based on the ink dot data DID and the treatment liquid dot data DRD.

As described above, the technique reduces the likelihood that the multiple boundary end dots IDS1, which define the boundary B between the adjacent unit images GA in the subscanning direction H2 on the medium W, are arranged linearly in the main scanning direction H1 or along a single waveform, among the boundary area dots IDS for forming the boundary area BA included in the multiple ink dots ID included in the ink dot data DID for each pass operation. The multiple boundary end dots IDS1 are thus randomly distributed in the subscanning direction H2. This reduces, for example, uneven density appearing as a streak in the boundary area BA between the unit images GA on the medium W caused by multiple boundary end dots IDS1. This reduces deterioration in the quality of images formed on the medium W.

### REFERENCE SIGNS

- 1: inkjet recording system
- 2: inkjet printer
- 3: ink head
- 31: individual head
- 5: printer controller (controller)
- 6: computer (dot data generator)
- DID: ink dot data
- GA: unit image
- H1: main scanning direction
- H2: subscanning direction
- ID: ink dot
- IDS: boundary area dot
- IDS1: boundary end dot
- W: medium (recording material)

## Claims

1. An inkjet recording system (1), comprising:
an ink head (3) movable in a main scanning direction (H1) and configured to eject ink onto a recording material (W);
a feeder (21) configured to feed the recording material (W) in a sub-scanning direction (H2) perpendicular to the main scanning direction (H1);
a controller (5) configured to perform an image formation process of forming a plurality of unit images (GA) on the recording material (W) in a manner arranged in the sub-scanning direction (H2) by repeatedly performing a pass operation and a feed operation, the pass operation being an operation in which the controller (5) causes the ink head (3) to eject the ink while moving the ink head (3) in the main scanning direction (H1) to form a plurality of ink dots (ID) on the recording material (W), the feed operation being an operation in which the controller (5) causes the feeder (21) to feed the recording material (W) in the sub-scanning direction (H2), the plurality of unit images (GA) each corresponding to the pass operation performed at least once and including the plurality of ink dots (ID); and
a dot data generator configured to perform an ink data generation process of generating ink dot data (DID) for each pass operation, the ink dot data (DID) indicating a pattern of the plurality of ink dots (ID) for forming each of the plurality of unit images (GA) on the recording material (W),
wherein in the image formation process, the controller (5) is configured to perform the pass operation and the feed operation to form a boundary area (BA) on the recording material (W), and the boundary area (BA) corresponds to a partial overlap between adjacent unit images (GA) of the plurality of unit images (GA) in the sub-scanning direction (H2), and extends in the main scanning direction (H1), and
in the ink data generation process, the dot data generator is configured to set a position, in the sub-scanning direction (H2), of each of a plurality of boundary end dots (IDS1) arranged in the main scanning direction (H1) to a position based on one of a plurality of pattern waveforms (SW1 to SW4) having a wavelength corresponding to the main scanning direction (H1) and an amplitude corresponding to the sub-scanning direction (H2) and differing from each other in phase, the plurality of boundary end dots (IDS1) defines a boundary between the adjacent unit images (GA) in the sub-scanning direction (H2) on the recording material (W), the plurality of boundary end dots (IDS1) is included in boundary area dots (IDS) for forming the boundary area (BA), and the boundary area dots (IDS) are included in the plurality of ink dots (ID) included in the ink dot data (DID) for each pass operation.

2. The inkjet recording system (1) according to claim 1, wherein
the dot data generator is configured to set the position of each of the plurality of boundary end dots (IDS1) in the sub-scanning direction (H2) to cause positions, in the sub-scanning direction (H2), of adjacent boundary end dots (IDS1) of the plurality of boundary end dots (IDS1) in the main scanning direction (H1) to be positions based on the plurality of pattern waveforms (SW1 to SW4) differing from each other.

3. The inkjet recording system (1) according to claim 1, wherein
the dot data generator is configured to divide a group of main scanning coordinates defining the position of each of the plurality of boundary end dots (IDS1) in the main scanning direction (H1) into a plurality of regions each including coordinates equal in number to the plurality of pattern waveforms (SW1 to SW4), and
the dot data generator is configured to set the position of each of the plurality of boundary end dots (IDS1) in the sub-scanning direction (H2) to cause positions, in the sub-scanning direction (H2), of boundary end dots (IDS1) corresponding to each of the plurality of regions to be positions based on the plurality of pattern waveforms (SW1 to SW4) differing from each other.

4. The inkjet recording system (1) according to claim 1, wherein
the plurality of pattern waveforms (SW1 to SW4) has a same wavelength and a same amplitude.

5. The inkjet recording system (1) according to claim 1, wherein
the ink head (3) includes a plurality of individual heads each configured to eject the ink of a corresponding color of a plurality of colors,
in the ink data generation process, the dot data generator is configured to generate the ink dot data (DID) for each pass operation for each of the plurality of colors corresponding to the plurality of respective individual heads, and
in the ink data generation process, the dot data generator is configured to set the position, in the sub-scanning direction (H2), of each of the plurality of boundary end dots (IDS1) in the ink dot data (DID) for each of the plurality of colors to a position based on one of the plurality of pattern waveforms (SW1 to SW4), and change at least one of the phase or the wavelength of the plurality of pattern waveforms (SW1 to SW4) for the ink dot data (DID) for each of the plurality of colors.

6. The inkjet recording system (1) according to claim 5, wherein
in the ink data generation process, the dot data generator is configured to set the position, in the sub-scanning direction (H2), of each of the plurality of boundary end dots (IDS1) in the ink dot data (DID) for each of the plurality of colors to a position based on one of the plurality of pattern waveforms (SW1 to SW4), and change at least one of the phase or the wavelength of the plurality of pattern waveforms (SW1 to SW4) for the ink dot data (DID) for each of the plurality of colors to cause at least one of the phase or the wavelength to differ between adjacent colors of the plurality of colors in a color wheel.

7. The inkjet recording system (1) according to any one of claims 1 to 6, wherein
the recording material (W) is a fabric member comprising fabric.

8. An inkjet recording method for recording an image on a recording material (W) using an ink head (3) movable in a main scanning direction (H1), the method comprising:
forming a plurality of unit images (GA) on the recording material (W) in a manner arranged in a sub-scanning direction (H2) perpendicular to the main scanning direction (H1) by repeatedly performing a pass operation and a feed operation, the pass operation being an operation to cause the ink head (3) to eject ink while moving the ink head (3) in the main scanning direction (H1) to form a plurality of ink dots (ID) on the recording material (W), the feed operation being an operation to feed the recording material (W) in the sub-scanning direction (H2), the plurality of unit images (GA) each corresponding to the pass operation performed at least once and including the plurality of ink dots (ID); and
generating ink dot data (DID) for each pass operation, the ink dot data (DID) indicating a pattern of the plurality of ink dots (ID) for forming each of the plurality of unit images (GA) on the recording material (W),
wherein forming the plurality of unit images (GA) includes performing the pass operation and the feed operation to form a boundary area (BA) on the recording material (W), and the boundary area (BA) corresponds to a partial overlap between adjacent unit images (GA) of the plurality of unit images (GA) in the sub-scanning direction (H2), and extends in the main scanning direction (H1), and
generating the ink dot data (DID) includes setting a position, in the sub-scanning direction (H2), of each of a plurality of boundary end dots (IDS1) arranged in the main scanning direction (H1) to a position based on one of a plurality of pattern waveforms (SW1 to SW4) having a wavelength corresponding to the main scanning direction (H1) and an amplitude corresponding to the sub-scanning direction (H2) and differing from each other in phase, the plurality of boundary end dots (IDS1) defines a boundary between the adjacent unit images (GA) in the sub-scanning direction (H2) on the recording material (W), the plurality of boundary end dots (IDS1) is included in boundary area dots (IDS) for forming the boundary area (BA), and the boundary area dots (IDS) are included in the plurality of ink dots (ID) included in the ink dot data (DID) for each pass operation.

## Patentansprüche

1. Tintenstrahlaufzeichnungssystem (1), aufweisend:
einen Tintenkopf (3), der in einer Hauptabtastrichtung (H1) bewegbar ist und konfiguriert ist, um Tinte auf ein Aufzeichnungsmaterial (W) auszustoßen,
eine Zuführeinrichtung (21), die konfiguriert ist, um das Aufzeichnungsmaterial (W) in einer Nebenabtastrichtung (H2) senkrecht zur Hauptabtastrichtung (H1) zuzuführen,
eine Steuereinrichtung (5), die konfiguriert ist, um einen Bilderzeugungsvorgang zum Erzeugen einer Mehrzahl von Einheitsbildern (GA) auf dem Aufzeichnungsmaterial (W) in einer in der Nebenabtastrichtung (H2) angeordneten Weise durchzuführen durch wiederholtes Durchführen eines Durchlaufvorgangs und eines Zuführvorgangs, wobei der Durchlaufvorgang ein Vorgang ist, bei dem die Steuereinrichtung (5) den Tintenkopf (3) veranlasst, die Tinte auszustoßen, während der Tintenkopf (3) in der Hauptabtastrichtung (H1) bewegt wird, um eine Mehrzahl von Tintenpunkten (ID) auf dem Aufzeichnungsmaterial (W) zu erzeugen, wobei der Zuführvorgang ein Vorgang ist, bei dem die Steuereinrichtung (5) die Zuführeinrichtung (21) veranlasst, das Aufzeichnungsmaterial (W) in der Nebenabtastrichtung (H2) zuzuführen, wobei die Mehrzahl von Einheitsbildern (GA) jeweils mit dem mindestens einmal durchgeführten Durchlaufvorgang korrespondiert und die Mehrzahl von Tintenpunkten (ID) aufweist, und
einen Punktdatengenerator, der konfiguriert ist, um einen Tintendatenerzeugungsvorgang zum Erzeugen von Tintenpunktdaten (DID) für jeden Durchlaufvorgang durchzuführen, wobei die Tintenpunktdaten (DID) ein Muster der Mehrzahl von Tintenpunkten (ID) zum Erzeugen von jedem aus der Mehrzahl von Einheitsbildern (GA) auf dem Aufzeichnungsmaterial (W) angeben,
wobei beim Bilderzeugungsvorgang die Steuereinrichtung (5) konfiguriert ist, um den Durchlaufvorgang und den Zuführvorgang durchzuführen, um einen Grenzbereich (BA) auf dem Aufzeichnungsmaterial (W) zu bilden, und der Grenzbereich (BA) mit einer teilweisen Überlappung zwischen benachbarten Einheitsbildern (GA) der Mehrzahl von Einheitsbildern (GA) in der Nebenabtastrichtung (H2) korrespondiert, und sich in der Hauptabtastrichtung (H1) erstreckt, und
beim Tintendatenerzeugungsvorgang der Punktdatengenerator konfiguriert ist, um eine Position, in der Nebenabtastrichtung (H2), von jedem einer Mehrzahl von in der Hauptabtastrichtung (H1) angeordneten Grenzendpunkten (IDS1) auf eine Position festzulegen, die auf einer aus einer Mehrzahl von Musterwellenformen (SW1 bis SW4) basiert, die eine Wellenlänge, die mit der Hauptabtastrichtung (H1) korrespondiert, und eine mit der Nebenabtastrichtung (H2) korrespondierende Amplitude haben und sich in Phase voneinander unterscheiden, wobei die Mehrzahl von Grenzendpunkten (IDS1) eine Grenze zwischen den benachbarten Einheitsbildern (GA) in der Nebenabtastrichtung (H2) auf dem Aufzeichnungsmaterial (W) definiert, die Mehrzahl von Grenzendpunkten (IDS1) in Grenzbereichspunkten (IDS) zum Ausbilden des Grenzbereichs (BA) enthalten ist, und die Grenzbereichspunkte (IDS) in der Mehrzahl von Tintenpunkten (ID) enthalten sind, die in den Tintenpunktdaten (DID) für jeden Durchlaufvorgang enthalten sind.

2. Tintenstrahlaufzeichnungssystem (1) gemäß Anspruch 1, wobei
der Punktdatengenerator konfiguriert ist, um die Position von jedem aus der Mehrzahl von Grenzendpunkten (IDS1) in der Nebenabtastrichtung (H2) festzulegen, um zu bewirken, dass Positionen, in der Nebenabtastrichtung (H2), von benachbarten Grenzendpunkten (IDS1) der Mehrzahl von Grenzendpunkten (IDS1) in der Hauptabtastrichtung (H1) Positionen basierend auf der Mehrzahl von sich voneinander unterscheidenden Musterwellenformen (SW1 bis SW4) sind.

3. Tintenstrahlaufzeichnungssystem (1) gemäß Anspruch 1, wobei
der Punktdatengenerator konfiguriert ist, um eine Gruppe von Hauptabtastkoordinaten, die die Position von jedem aus der Mehrzahl von Grenzendpunkten (IDS1) in der Hauptabtastrichtung (H1) definieren, in eine Mehrzahl von Bereichen zu unterteilen, die jeweils Koordinaten in gleicher Zahl wie die Mehrzahl von Musterwellenformen (SW1 bis SW4) aufweisen, und
der Punktdatengenerator konfiguriert ist, um die Position von jedem aus der Mehrzahl von Grenzendpunkten (IDS1) in der Nebenabtastrichtung (H2) so festzulegen, dass bewirkt wird, dass Positionen, in der Nebenabtastrichtung (H2), von Grenzendpunkten (IDS1), die mit jedem aus der Mehrzahl von Bereichen korrespondieren, Positionen sind, die auf der Mehrzahl von Musterwellenformen (SW1 bis SW4) basieren, die sich voneinander unterscheiden.

4. Tintenstrahlaufzeichnungssystem (1) gemäß Anspruch 1, wobei
die Mehrzahl von Musterwellenformen (SW1 bis SW4) eine gleiche Wellenlänge und eine gleiche Amplitude hat.

5. Tintenstrahlaufzeichnungssystem (1) gemäß Anspruch 1, wobei
der Tintenkopf (3) eine Mehrzahl von Einzelköpfen aufweist, die jeweils konfiguriert sind, um die Tinte einer korrespondierenden Farbe einer Mehrzahl von Farben auszustoßen,
beim Tintendatenerzeugungsvorgang der Punktdatengenerator konfiguriert ist, um die Tintenpunktdaten (DID) für jeden Durchlaufvorgang für jede aus der Mehrzahl von Farben korrespondierend mit der Mehrzahl von jeweiligen Einzelköpfen zu erzeugen, und
beim Tintendatenerzeugungsvorgang der Punktdatengenerator konfiguriert ist, um die Position, in der Nebenabtastrichtung (H2), von jedem aus der Mehrzahl von Grenzendpunkten (IDS1) in den Tintenpunktdaten (DID) für jede aus der Mehrzahl von Farben auf eine Position basierend auf einer aus der Mehrzahl von Musterwellenformen (SW1 bis SW4) festzulegen und mindestens eines von der Phase oder der Wellenlänge der Mehrzahl von Musterwellenformen (SW1 bis SW4) für die Tintenpunktdaten (DID) für jede aus der Mehrzahl von Farben zu ändern.

6. Tintenstrahlaufzeichnungssystem (1) gemäß Anspruch 5, wobei
beim Tintendatenerzeugungsvorgang der Punktdatengenerator konfiguriert ist, um die Position, in der Nebenabtastrichtung (H2), von jedem aus der Mehrzahl von Grenzendpunkten (IDS1) in den Tintenpunktdaten (DID) für jede aus der Mehrzahl von Farben auf eine Position basierend auf einer aus der Mehrzahl von Musterwellenformen (SW1 bis SW4) festzulegen und mindestens eines von der Phase oder der Wellenlänge der Mehrzahl von Musterwellenformen (SW1 bis SW4) für die Tintenpunktdaten (DID) für jede aus der Mehrzahl von Farben zu ändern, um zu bewirken, dass mindestens eines von der Phase oder der Wellenlänge sich zwischen benachbarten Farben der Mehrzahl von Farben in einem Farbkreis unterscheidet.

7. Tintenstrahlaufzeichnungssystem (1) gemäß irgendeinem der Ansprüche 1 bis 6, wobei
das Aufzeichnungsmaterial (W) ein Gewebeelement ist, das Gewebe aufweist.

8. Tintenstrahlaufzeichnungsverfahren zum Aufzeichnen eines Bildes auf einem Aufzeichnungsmaterial (W) unter Verwendung eines in einer Hauptabtastrichtung (H1) bewegbaren Tintenkopfes (3), wobei das Verfahren aufweist:
Erzeugen einer Mehrzahl von Einheitsbildern (GA) auf dem Aufzeichnungsmaterial (W) in einer Weise, die in einer zur Hauptabtastrichtung (H1) senkrechten Nebenabtastrichtung (H2) angeordnet ist, durch wiederholtes Ausführen eines Durchlaufvorgangs und eines Zuführvorgangs, wobei der Durchlaufvorgang ein Vorgang ist, um den Tintenkopf (3) zu veranlassen, Tinte auszustoßen, während der Tintenkopf (3) in der Hauptabtastrichtung (H1) bewegt wird, um eine Mehrzahl von Tintenpunkten (ID) auf dem Aufzeichnungsmaterial (W) zu erzeugen, wobei der Zuführvorgang ein Vorgang ist, um das Aufzeichnungsmaterial (W) in der Nebenabtastrichtung (H2) zuzuführen, wobei die Mehrzahl von Einheitsbildern (GA) jeweils mit dem Durchlaufvorgang korrespondiert, der mindestens einmal durchgeführt wird, und die Mehrzahl von Tintenpunkten (ID) aufweist, und
Erzeugen von Tintenpunktdaten (DID) für jeden Durchlaufvorgang, wobei die Tintenpunktdaten (DID) ein Muster der Mehrzahl von Tintenpunkten (ID) zum Erzeugen von jedem aus der Mehrzahl von Einheitsbildern (GA) auf dem Aufzeichnungsmaterial (W) angeben,
wobei das Erzeugen der Mehrzahl von Einheitsbildern (GA) aufweist: Durchführen des Durchlaufvorgangs und des Zuführvorgangs, um einen Grenzbereich (BA) auf dem Aufzeichnungsmaterial (W) zu erzeugen, und der Grenzbereich (BA) mit einer teilweisen Überlappung zwischen benachbarten Einheitsbildern (GA) der Mehrzahl von Einheitsbildern (GA) in der Nebenabtastrichtung (H2) korrespondiert und sich in der Hauptabtastrichtung (H1) erstreckt, und
das Erzeugen der Tintenpunktdaten (DID) aufweist: Festlegen einer Position, in der Nebenabtastrichtung (H2), von jedem aus einer Mehrzahl von Grenzendpunkten (IDS1), die in der Hauptabtastrichtung (H1) angeordnet sind, auf eine Position basierend auf einer aus einer Mehrzahl von Musterwellenformen (SW1 bis SW4) mit einer Wellenlänge, die mit der Hauptabtastrichtung (H1) korrespondiert, und einer Amplitude, die mit der Nebenabtastrichtung (H2) korrespondiert, und die sich in Phase voneinander unterscheiden, wobei die Mehrzahl von Grenzendpunkten (IDS1) eine Grenze zwischen den benachbarten Einheitsbildern (GA) in der Nebenabtastrichtung (H2) auf dem Aufzeichnungsmaterial (W) definiert, wobei die Mehrzahl von Grenzendpunkten (IDS1) in Grenzbereichspunkten (IDS) zum Ausbilden des Grenzbereichs (BA) enthalten ist und die Grenzbereichspunkte (IDS) in der Mehrzahl von Tintenpunkten (ID) enthalten sind, die in den Tintenpunktdaten (DID) für jeden Durchlaufvorgang enthalten sind.

## Revendications

1. Système d'enregistrement à jet d'encre (1), comprenant :
une tête d'encre (3) mobile dans une direction de balayage principale (H1) et configurée pour éjecter de l'encre sur un matériau d'enregistrement (W) ;
un dispositif d'alimentation (21) configuré pour fournir le matériau d'enregistrement (W) dans une direction de sous-balayage (H2) perpendiculaire à la direction de balayage principale (H1) ;
un contrôleur (5) configuré pour effectuer un processus de formation d'image consistant à former une pluralité d'images unitaires (GA) sur le matériau d'enregistrement (W) de manière à ce qu'elles soient disposées dans la direction de sous-balayage (H2), en effectuant de manière répétée une opération de passage et une opération d'alimentation, l'opération de passage étant une opération dans laquelle le contrôleur (5) amène la tête d'encre (3) à éjecter l'encre tout en déplaçant la tête d'encre (3) dans la direction de balayage principale (H1) afin de former une pluralité de points d'encre (ID) sur le matériau d'enregistrement (W), l'opération d'alimentation étant une opération au cours de laquelle le contrôleur (5) amène le dispositif d'alimentation (21) à fournir le matériau d'enregistrement (W) dans la direction de sous-balayage (H2), la pluralité d'images unitaires (GA) correspondant chacune à l'opération de passage effectuée au moins une fois et comprenant la pluralité de points d'encre (ID) ; et
un générateur de données de points configuré pour effectuer un processus de génération de données d'encre consistant à générer des données de points d'encre (DID) pour chaque opération de passage, les données de points d'encre (DID) indiquant un motif de la pluralité de points d'encre (ID) pour former chacune de la pluralité d'images unitaires (GA) sur le matériau d'enregistrement (W),
dans lequel, dans le processus de formation d'image, le contrôleur (5) est configuré pour effectuer l'opération de passage et l'opération d'alimentation afin de former une zone de limite (BA) sur le matériau d'enregistrement (W), et la zone de limite (BA) correspond à un chevauchement partiel entre des images unitaires adjacentes (GA) de la pluralité d'images unitaires (GA) dans la direction de sous-balayage (H2), et s'étend dans la direction de balayage principale (H1), et
dans le processus de génération de données d'encre, le générateur de données de points est configuré pour fixer une position, dans la direction de sous-balayage (H2), de chacun d'une pluralité de points d'extrémité de limite (IDS1) disposés dans la direction de balayage principale (H1), à une position basée sur l'une d'une pluralité de formes d'onde de motif (SW1 à SW4) ayant une longueur d'onde correspondant à la direction de balayage principal (H1) et une amplitude correspondant à la direction de sous-balayage (H2) et différant les unes des autres en phase, la pluralité de points d'extrémité de limite (IDS1) définit une limite entre les images unitaires (GA) adjacentes dans la direction de sous-balayage (H2) sur le matériau d'enregistrement (W), la pluralité de points d'extrémité de limite (IDS1) est incluse dans des points de zone de limite (IDS) pour former la zone de limite (BA), et les points de zone de limite (IDS) sont inclus dans la pluralité de points d'encre (ID) inclus dans les données de points d'encre (DID) pour chaque opération de passage.

2. Système d'enregistrement à jet d'encre (1) selon la revendication 1, dans lequel
le générateur de données de points est configuré pour définir la position de chacun de la pluralité de points d'extrémité de limite (IDS1) dans la direction de sous-balayage (H2) de manière à amener des positions, dans la direction de sous-balayage (H2), de points d'extrémité de limite adjacents (IDS1) de la pluralité de points d'extrémité de limite (IDS1) dans la direction de balayage principale (H1) à être des positions basées sur la pluralité de formes d'onde de motif (SW1 à SW4) différentes les unes des autres.

3. Système d'enregistrement à jet d'encre (1) selon la revendication 1, dans lequel
le générateur de données de points est configuré pour diviser un groupe de coordonnées de balayage principales définissant la position de chacun de la pluralité de points d'extrémité de limite (IDS1) dans la direction de balayage principale (H1) en une pluralité de régions comprenant chacune un nombre de coordonnées égal à celui de la pluralité de formes d'onde de motif (SW1 à SW4), et
le générateur de données de points est configuré pour fixer la position de chacun de la pluralité de points d'extrémité de limite (IDS1) dans la direction de sous-balayage (H2) de manière à amener des positions, dans la direction de sous-balayage (H2), de points d'extrémité de limite (IDS1) correspondant à chacune de la pluralité de régions à être des positions basées sur la pluralité de formes d'onde de motif (SW1 à SW4) différentes les unes des autres.

4. Système d'enregistrement à jet d'encre (1) selon la revendication 1, dans lequel
la pluralité de formes d'onde de motif (SW1 à SW4) présentent une même longueur d'onde et une même amplitude.

5. Système d'enregistrement à jet d'encre (1) selon la revendication 1, dans lequel
la tête d'encre (3) comprend une pluralité de têtes individuelles, chacune étant configurée pour éjecter l'encre d'une couleur correspondante d'une pluralité de couleurs,
dans le processus de génération de données d'encre, le générateur de données de points est configuré pour générer les données de points d'encre (DID) pour chaque opération de passage pour chacune de la pluralité de couleurs correspondant à la pluralité de têtes individuelles respectives, et
dans le processus de génération de données d'encre, le générateur de données de points est configuré pour fixer la position, dans la direction de sous-balayage (H2), de chacun de la pluralité de points d'extrémité de limite (IDS1) dans les données de points d'encre (DID) pour chacune de la pluralité de couleurs à une position basée sur l'une de la pluralité de formes d'onde de motif (SW1 à SW4), et pour modifier au moins l'une parmi la phase ou la longueur d'onde de la pluralité de formes d'onde de motif (SW1 à SW4) pour les données de points d'encre (DID) pour chacune de la pluralité de couleurs.

6. Système d'enregistrement à jet d'encre (1) selon la revendication 5, dans lequel
dans le processus de génération de données d'encre, le générateur de données de points est configuré pour fixer la position, dans la direction de sous-balayage (H2), de chacun de la pluralité de points d'extrémité de limite (IDS1) dans les données de points d'encre (DID) pour chacune de la pluralité de couleurs, à une position basée sur l'une de la pluralité de formes d'onde de motif (SW1 à SW4), et pour modifier au moins l'une parmi la phase ou la longueur d'onde de la pluralité de formes d'onde de motif (SW1 à SW4) pour les données de points d'encre (DID) pour chacune de la pluralité de couleurs, de manière à amener au moins l'une parmi la phase ou la longueur d'onde à différer entre des couleurs adjacentes de la pluralité de couleurs d'une roue chromatique.

7. Système d'enregistrement à jet d'encre (1) selon l'une quelconque des revendications 1 à 6, dans lequel
le matériau d'enregistrement (W) est un élément en tissu comprenant du tissu.

8. Procédé d'enregistrement à jet d'encre pour enregistrer une image sur un matériau d'enregistrement (W) en utilisant une tête d'encre (3) mobile dans une direction de balayage principale (H1), le procédé comprenant :
la formation d'une pluralité d'images unitaires (GA) sur le matériau d'enregistrement (W) de manière à ce qu'elles soient disposées dans une direction de sous-balayage (H2) perpendiculaire à la direction de balayage principale (H1), en effectuant de manière répétée une opération de passage et une opération d'alimentation, l'opération de passage étant une opération consistant à amener la tête d'encre (3) à éjecter de l'encre tout en déplaçant la tête d'encre (3) dans la direction de balayage principale (H1) afin de former une pluralité de points d'encre (ID) sur le matériau d'enregistrement (W), l'opération d'alimentation étant une opération pour fournir le matériau d'enregistrement (W) dans la direction de sous-balayage (H2), la pluralité d'images unitaires (GA) correspondant chacune à l'opération de passage effectuée au moins une fois et comprenant la pluralité de points d'encre (ID) ; et
la génération de données de points d'encre (DID) pour chaque opération de passage, les données de points d'encre (DID) indiquant un motif de la pluralité de points d'encre (ID) pour former chacune de la pluralité d'images unitaires (GA) sur le matériau d'enregistrement (W),
dans lequel la formation de la pluralité d'images unitaires (GA) comprend l'exécution de l'opération de passage et de l'opération d'alimentation pour former une zone de limite (BA) sur le matériau d'enregistrement (W), et la zone de limite (BA) correspond à un chevauchement partiel entre des images unitaires adjacentes (GA) de la pluralité d'images unitaires (GA) dans la direction de sous-balayage (H2), et s'étend dans la direction de balayage principal (H1), et
la génération des données de points d'encre (DID) comprend la fixation d'une position, dans la direction de sous-balayage (H2), de chacun d'une pluralité de points d'extrémité de limite (IDS1) disposés dans la direction de balayage principal (H1) à une position basée sur l'une d'une pluralité de formes d'onde de motif (SW1 à SW4) ayant une longueur d'onde correspondant à la direction de balayage principal (H1) et une amplitude correspondant à la direction de sous-balayage (H2) et différant les unes des autres en phase, la pluralité de points d'extrémité de limite (IDS1) définit une limite entre les images unitaires adjacentes (GA) dans la direction de sous-balayage (H2) sur le matériau d'enregistrement (W), la pluralité de points d'extrémité de limite (IDS1) est incluse dans les points de zone de limite (IDS) pour former la zone de limite (BA), et les points de zone de limite (IDS) sont inclus dans la pluralité de points d'encre (ID) inclus dans les données de points d'encre (DID) pour chaque opération de passage.
